# EUROPÄISCHE PATENTSCHRIFT

(11) **EP 3 937 742 B1**
(45) Veröffentlichungstag und Bekanntmachung des Hinweises auf die Patenterteilung: **27.12.2023**
(21) Anmeldenummer: 20712470.2
(22) Anmeldetag: 10.03.2020
(51) Int. Cl.: A47J 37/07, B01D 53/86

(54) **ANZÜNDKAMIN MIT KATALYSATOREINHEIT**
CHIMNEY STARTER WITH CATALYST UNIT
CHEMINÉE D'ALLUMAGE AVEC UNITÉ À CATALYSEUR

(30) Priorität: 13.03.2019 DE 202019101426 U
(43) Veröffentlichungstag der Anmeldung: 19.01.2022
(73) Patentinhaber: InoxAir GmbH, 45881 Gelsenkirchen (DE)
(72) Erfinder: BRUDER, René, 45894 Gelsenkirchen (DE); KAYA, Siar, 46282 Dorsten (DE)
(74) Vertreter: Gesthuysen Patentanwälte
(86) Internationale Anmeldenummer: PCT/EP2020/056348
(87) Internationale Veröffentlichungsnummer: WO 2020/182811

(56) Entgegenhaltungen:
- US-A- 5 469 835
- US-B1- 9 863 634

## Beschreibung

Die Erfindung betrifft einen Anzündkamin für kohlenstoffhaltigen Brennstoff, mit einem Gehäuse, einem in dem Gehäuse ausgebildeten unteren Brennraum für leicht entzündlichen Anzünder, mit einem in dem Gehäuse ausgebildeten oberen Brennraum für den kohlenstoffhaltigen Brennstoff, wobei im betriebsfertigen Zustand der obere Brennraum über dem unteren Brennraum angeordnet ist und der untere Brennraum und der obere Brennraum durch ein gasdurchlässiges Trennelement voneinander getrennt sind, wobei die obere Seite des Trennelements, die dem oberen Brennraum zugewandt ist, einen Aufnahmeort für den Brennstoff bildet, wobei das Trennelement so ausgebildet ist, dass die im entzündeten Zustand des Anzünders entstehenden Anzünderabgase durch das Trennelement hindurchtreten und auf den auf dem Trennelement ruhenden Brennstoff treffen.

Anzündkamine der zuvor beschriebenen Art sind seit Langem bekannt, beispielsweise aus der US 5,469,835 A. Es handelt sich um Anzündhilfen für kohlenstoffhaltigen Brennstoff, meist in Form von Kohle. Typische Anwendungsbereiche sind das Anzünden von Kohlen für Grills, zunehmend aber auch von Kohlen für den Gebrauch mit Wasserpfeifen.

Die kalten, noch zu entzündenden Kohlen werden in den oberen Brennraum gegeben, die Kohlen kommen auf dem Trennelement zwischen dem oberen und dem unteren Brennraum zum liegen. Zur weiteren Verwendung wird dann der Anzünder meist auf eine feuerfeste Unterlage gelegt und dort entzündet. Der Anzündkamin wird dann so auf den Anzünder gestellt, dass dieser in dem unteren Brennraum aufgenommen wird und ungestört weiterbrennen kann. Wenn hier von "oben" und "unten" die Rede ist, dann ist damit das landläufige Verständnis gemeint, nämlich das der Orientierung des Erdschwerefeldes, dessen Kraftwirkung nach "unten" weist; die entgegengesetzte Richtung ist demzufolge "oben". Die heißen Anzünderabgase steigen konvektiv nach oben auf, durch das gasdurchlässige Trennelement - beispielsweise ein gelochtes Blech - und strömen dann den Brennstoff im oberen Brennraum an, der sich dann entzündet.

Das Gehäuse des Anzündkamins wird oft durch einen Metalltubus gebildet, in dem sich praktisch nur das Trennelement befindet. Der Tubus ist also nach oben und unten offen und über die Öffnungen sind der obere Brennraum und der untere Brennraum zugänglich. Im einsatzfähigen Zustand steht der Anzündkamin mit der Berandungskontur der Öffnung des unteren Brennraums auf einem - vorzugsweise feuerfesten - Untergrund. Wenn der Brennstoff im oberen Brennraume entzündet ist, kann er aus der Öffnung im oberen Brennraum entnommen werden, beispielsweise in einzelnen Stücken mit einer Zange, der Brennstoff kann aber auch einfach ausgekippt werden.

Ein ernst zu nehmendes Problem geht von den Brennstoffabgasen aus, die der Brennstoff im entzündeten Zustand erzeugt. Insbesondere ist das in den Abgasen enthaltene Kohlenstoffmonoxid (häufig einfach als Kohlenmonoxid bezeichnet, mit der Summenformel CO) problematisch, da es extrem toxisch ist, gleichwohl aber für Menschen nicht wahrnehmbar ist, da es farb-, geruch- und geschmacklos ist. Es entsteht typischerweise bei der unvollständigen Verbrennung von kohlenstoffhaltigen Brennstoffen - wie beispielsweise den im Regelfall zum Einsatz kommenden Kohlestückchen. Insbesondere wenn Anzündkamine in geschlossenen oder unzureichend belüfteten Räumen betrieben werden, besteht die akute Gefahr einer Kohlenmonoxid-Vergiftung. Dies kann beispielsweise auftreten bei der Vorbereitung einer Mehrzahl an Kohlestücken zur Verwendung mit Wasserpfeifen, was beispielsweise in entsprechenden Innenräumen von Shisha-Bars praktiziert wird.

Aus der US 9,863,634 B1 ist ein Filtereinsatz für einen Gasofen bekannt, mit dem es möglich ist, das im Abgas enthaltene Kohlenmonoxid zumindest teilweise zu Kohlendioxid zu oxidieren.

Die Aufgabe der vorliegenden Erfindung besteht daher darin, einen Anzündkamin anzugeben, bei dem die Gefahr einer Kohlenstoffmonoxid-Vergiftung durch Abgase beim Verbrennen des (kohlenstoffhaltigen) Brennstoffs erheblich vermindert wird.

Die zuvor hergeleitete Aufgabe ist bei dem eingangs dargestellten Anzündkamin dadurch gelöst, dass oberhalb des Aufnahmeortes für den Brennstoff ein Katalysator zur Katalyse der Oxidation von Kohlenmonoxid zu Kohlendioxid durch Sauerstoff so angeordnet ist, dass die im entzündeten Zustand des Brennstoffes entstehenden Brennstoffabgase zumindest teilweise zu dem Katalysator oder durch den Katalysator geleitet werden und zumindest ein Teil des in den Brennstoffabgasen vorhandenen Kohlenmonoxids zu Kohlendioxid oxidiert wird

Durch Anordnung des Katalysators oberhalb des Aufnahmeortes für den Brennstoff wird bewirkt, dass die das giftige Kohlenmonoxid enthaltenden Brennstoffabgase zu dem bzw. durch den Katalysator geführt werden und mit dem Katalysator zumindest teilweise in Kontakt geraten und so der Anteil von Kohlenstoffmonoxid in den Brennstoffabgasen effektiv reduziert wird. Hierbei muss es sich nicht um eine aktive Führung der Brennstoffabgase handeln, also beispielsweise durch entsprechende gegenständliche Führungselemente, die Brennstoffabgase können auch einfach durch den sich ausbildenden vertikalen Konvektionsstrom zum Katalysator geführt werden. Ein derart ausgestalteter Anzündkamin hat den Vorteil, dass mit sehr einfachen Mitteln ein maßgebliches Problem bei der Verwendung von Anzündkaminen beseitigt wird. Bei geschickter Auslegung des Katalysators kann der Kohlenstoffmonoxid-Gehalt in den Brennstoffabgasen zum überwiegenden Teil durch den zum Einsatz kommenden katalytischen Prozess beseitigt werden. Die Verwendung von Anzündkaminen wird damit in geschlossenen Räumen ganz erheblich sicherer, insbesondere sinken dadurch auch die Anforderungen an entsprechende Be- und Entlüftungsanlagen.

Bei einer bevorzugten Ausgestaltung der Erfindung ist vorgesehen, dass der Katalysator so angeordnet oder ausgestaltet ist, dass im Betriebszustand bei entzündetem Brennstoff der zur Katalyse der Oxidation von Kohlenmonoxid zu Kohlendioxid erforderliche Sauerstoff durch Umgebungsluft bereitgestellt ist. Dies hat den Vorteil, dass zur Katalyse der Oxidation nicht separat Sauerstoff bereitgestellt werden muss. Dadurch verringert sich zwar der Sauerstoffgehalt in der Umgebungsluft, da dieser bei der Oxidation von Kohlenmonoxid zu Kohlendioxid gebunden wird, jedoch ist Kohlendioxid an sich nicht toxisch, jedenfalls nicht in den hier entstehenden Konzentrationen.

Bei einer weiteren vorteilhaften Ausgestaltung ist vorgesehen, dass der Katalysator durchströmbar ist, wobei im bestimmungsgemäßen Betriebszustand bei entzündetem Brennstoff und von den Brennstoffabgasen durchströmten Katalysator der Katalysator zwischen der Einströmseite und der Ausströmseite einen geringen Strömungswiderstand hat. Der Strömungswiderstand sollte so gewählt werden, dass sich ein Druckabfall zwischen der Einströmseite und der Ausströmseite des Katalysators von höchstens 15 Pa, bevorzugt von höchstens 1 Pa, bevorzugt von höchstens 0,5 Pa, weiter bevorzugt von höchsten 0,05 Pa einstellt. Je geringer der Strömungswiderstand ist, desto einfacher können die Brennstoffabgase durch den Katalysator hindurchtreten, es werden also Stauungseffekte an der Einströmseite des Katalysators vermieden. Der Strömungswiderstand kann nicht beliebig klein gemacht werden, da der Katalysator natürlich auch eine hinreichend große Oberfläche im Strom der Brennstoffabgase bereitstellen muss, damit der gewünschte Anteil an Kohlenmonoxid aus den Brennstoffabgasen durch Katalyse in Kohlendioxid umgewandelt wird.

Bei einer weiteren bevorzugten Ausgestaltung ist vorgesehen, dass der Katalysator so ausgelegt ist, dass die vom entzündeten Brennstoff freigesetzte Energie ausreicht, um die Brennstoffabgase durch den Katalysator zu treiben. Diese Ausgestaltung hat den Vorteil, dass keine Zusatzvorrichtung vorgesehen werden muss, um die Brennstoffabgase durch den Katalysator zu treiben. Der Gasstrom wird also durch die vom entzündeten Brennstoff freigesetzte Energie selbst angetrieben. Der maßgebliche Effekt besteht hier in der Verursachung eines Konvektionsstroms, sodass also heiße und damit weniger dichte Brennstoffabgase in der kühleren und damit dichteren Umgebungsluft nach oben aufsteigen und so automatisch ihren Weg durch den Katalysator finden, der ja oberhalb des Aufnahmeortes für den Brennstoff angeordnet ist.

Es hat sich als vorteilhaft herausgestellt, wenn der Katalysator zumindest teilweise aus einer beschichteten, offenporigen Schwammkeramik gebildet ist, wobei die Beschichtung zumindest teilweise aus Metalloxiden gebildet ist, insbesondere aus Übergangsmetallen und/oder Edelmetallen. Derartige Katalysatoren haben sich als sehr widerstandsfähig herausgestellt. Zudem weisen sie den Vorteil auf, dass sie vergleichsweise leicht gereinigt werden können, beispielsweise mit einem moderaten Druckluftstrom.

Bevorzugt ist der Katalysator so zu dem Aufnahmeort für den Brennstoff angeordnet, dass im Betriebszustand bei entzündetem Brennstoff die durch den entzündeten Brennstoff zum Katalysator transportierte Energie ausreicht, um die für die zu bewirkende Katalyse von Kohlenmonoxid zu Kohlendioxid erforderliche Katalysatortemperatur zu erzielen. Auch diese Ausgestaltung des erfindungsgemäßen Anzündkamins bzw. des dort verwendeten Katalysators ist insbesondere deshalb vorteilhaft, weil auf eine separate Energiezufuhr zur Beheizung des Katalysators vollständig verzichtet werden kann, der Katalysator erreicht seine Anspringtemperatur also alleine durch Energiezufuhr von dem entzündeten Brennstoff (Wärmestrahlung) und durch die dadurch bewirkten Brennstoffabgase (Konvektion). Der Wärmeeintrag geschieht hier einerseits durch den heißen konvektiven Strom der Brennstoffabgase durch den Katalysator, andererseits aber auch durch direkte Wärmestrahlung des entzündeten Brennstoffs.

Vorzugsweise wird ein derartiger Katalysator ausgewählt, der eine erforderliche Katalysatortemperatur (Anspringtemperatur) von höchstens 800 °C, bevorzugt von höchstens 400 °C, bevorzugt von höchsten 300 °C, besonders bevorzugt von höchstens 200 °C und weiter bevorzugt von höchsten 100 °C aufweist. Katalysatoren mit einer niedrigen Anspringtemperatur haben den Vorteil, dass sie schneller ihre Betriebstemperatur erreichen und sich so der gewünschte Effekt der Katalyse von Kohlenmonoxid in Kohlendioxid schneller einstellt. Verschiedene Versuche haben ergeben, dass verschiedene Katalysatoren auch unterhalb ihrer angegebenen Anspringtemperatur den katalytischen Effekt aufweisen, also die Aktivierungsenergie der gewünschten Oxidation herabsetzen.

Bei einer bevorzugten Weiterbildung des Anzündkamins ist vorgesehen, dass in oder an dem Gehäuse eine Halterung für den Katalysator ausgebildet ist, insbesondere im oberen Bereich des oberen Brennraums, wobei der Katalysator von der Halterung gehalten wird, insbesondere lösbar von der Halterung gehalten wird. Die Halterung kann beispielsweise in einem einfachen umlaufenden Steg an der Innenwandung des Gehäuses bestehen, auf dem der Katalysator lose aufliegt. Der Katalysator kann dann zum Zuführen und zum Entnehmen des Brennstoffs in den und aus dem oberen Brennraum entnommen werden.

Bei einer weiteren bevorzugten Ausgestaltung ist vorgesehen, dass im Gehäuse im seitlichen Bereich des oberen Brennraums eine Öffnung ausgebildet ist, über die der Brennstoff in den oberen Brennraum einbringbar ist und aus dem oberen Brennraum entnehmbar ist, insbesondere ohne den Katalysator vorher zu entfernen, insbesondere wobei die Öffnung mit einem Verschlusselement verschließbar ist. In diesem Fall muss der Katalysator nicht unbedingt lösbar von der Halterung gehalten werden.

Eine weitere bevorzugte Ausgestaltung sieht vor, dass der Katalysator Bestandteil einer Katalysatoreinheit mit einem Tubus ist und der Katalysator in dem Tubus gehalten wird, wobei sich der Tubus zwischen einer ersten Tubusöffnung und einer zweiten Tubusöffnung erstreckt, wobei im Montagezustand der Katalysatoreinheit die erste Tubusöffnung unterhalb der zweiten Tubusöffnung angeordnet ist, wobei der Katalysator in dem Querschnitt des Tubus mit einer Haltevorrichtung zwischen der ersten Tubusöffnung und der zweiten Tubusöffnung gehalten wird, wobei zur Erzielung des Montagezustandes der Katalysatoreinheit der Tubus im Bereich des oberen Brennraums in das Gehäuse eingesteckt wird oder über das Gehäuse übergestülpt wird. Mit einer solchen Katalysatoreinheit ist es möglich, auch aus dem Stand der Technik bekannte Anzündkamine mit einem Katalysator auszustatten. Es muss lediglich dafür gesorgt werden, dass eine entsprechende mechanische Anpassung gegeben ist, sodass zur Erzielung des Montagezustandes der Katalysatoreinheit der Tubus im Bereich des oberen Brennraums in das Gehäuse einsteckbar ist oder über das Gehäuse überstülpbar ist.

Der Katalysator soll insbesondere mindestens 99 %, insbesondere mindestens 95 %, bevorzugt mindestens 85 %, bevorzugt mindestens 75 % oder sogar nur mindestens 40 % des Querschnitts des Tubus einnehmen. Je größer die Querschnittsfläche ist, die der Katalysator im Tubus abdeckt, desto geringer sind mögliche Staueffekte in der Strömung. Auf der anderen Seite wird der Katalysator nur in dem Bereich wirksam, durch den Brennstoffabgase hindurchströmen. Bei der Auslegung der Größe des Katalysators ist also eine Abwägung zu treffen zwischen den unterschiedlichen Kosten von unterschiedlich großen Katalysatoren und den einzustellenden strömungstechnischen Randbedingungen.

Vorzugsweise ist die Haltevorrichtung der Katalysatoreinheit in dem Tubus als zumindest teilweise umlaufender Kragen ausgebildet. Der Kragen muss nicht vollständig umlaufen, er kann auch verschiedene Unterbrechungen aufweisen. Wichtig ist jedenfalls, dass sich der Katalysator im Montagezustand aufgrund seiner Gewichtskraft auf dem Kragen im Inneren des Tubus abstützen kann.

Bevorzugt ist vorgesehen, dass zwischen der Wandung des Tubus und dem Katalysator Strömungsöffnungen ausgebildet sind, insbesondere Strömungsöffnungen mit einem freien Querschnitt. Diese Strömungsöffnungen wirken funktional wie ein Bypass zur Umgehung des Strömungspfades durch den Katalysator. Da die Strömungsöffnungen zwischen der Wandung des Tubus und dem Katalysator vorgesehen sind, also außerhalb des zentralen Strömungsbereiches der Brennstoffabgase, werden diese Strömungsöffnungen verstärkt nur dann genutzt, wenn der eigentliche Strömungspfad der Brennstoffabgase durch den Katalysator blockiert ist, beispielsweise durch entsprechende Verschmutzungen.

Eine solche Ausgestaltung der Katalysatoreinheit ist ganz besonders gut geeignet als separates Zubehörteil für einen Anzündkamin, da es auch für Anzündkamine verwendbar ist, die noch nicht mit einem Katalysator oder einer Katalysatoreinheit ausgestattet sind.

Im Einzelnen gibt es nun eine Vielzahl von Möglichkeiten, den erfindungsgemäßen Anzündkamin auszugestalten und weiterzubilden. Dazu wird verwiesen sowohl auf die dem unabhängigen Patentanspruch nachgeordneten Patentansprüche als auch auf die nachfolgende Beschreibung von bevorzugten Ausführungsbeispielen in Verbindung mit der Zeichnung. In der Zeichnung zeigen
- Fig. 1: schematisch einen Anzündkamin mit Katalysatoreinheit,
- Fig. 2: einen Anzündkamin mit einer seitlichen Öffnung im Gehäuse im oberen Brennraum und mit einer Katalysatoreinheit und
- Fig. 3: schematisch eine Katalysatoreinheit mit einem nur teilweise angedeuteten Gehäuse eines Anzündkamins.

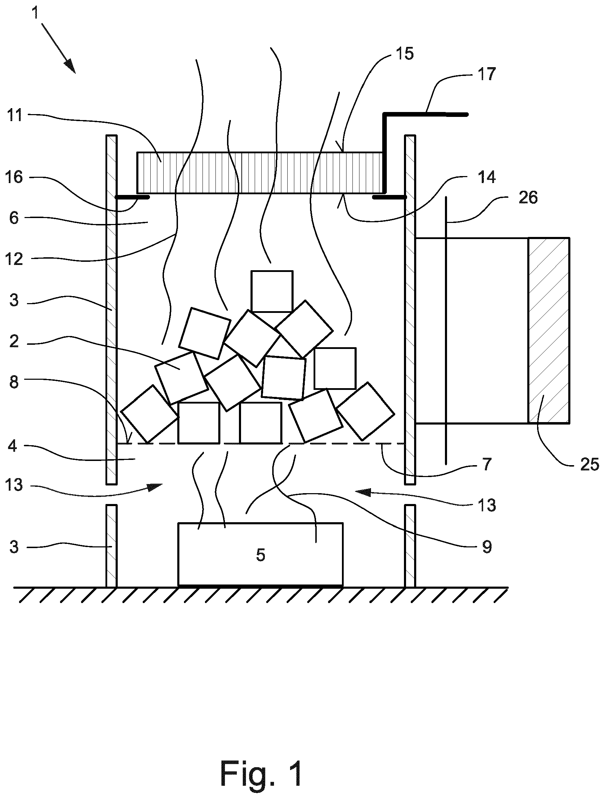

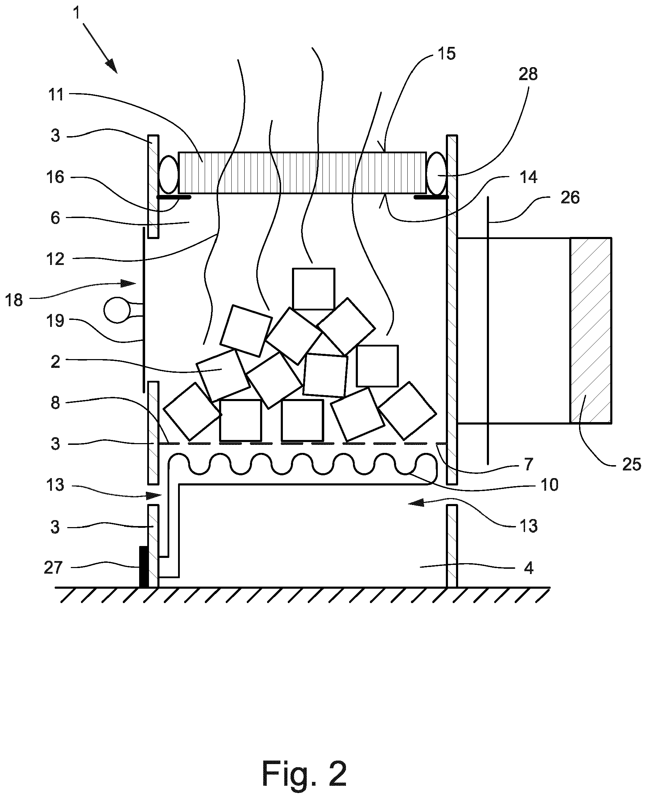

In den Fig. 1 und 2 ist jeweils ein vollständiger Anzündkamin 1 dargestellt. Der Anzündkamin 1 dient der einfachen Entzündung von kohlenstoffhaltigem Brennstoff 2. Der Anzündkamin 1 weist ein Gehäuse 3 auf, ein in dem Gehäuse 3 ausgebildeten unteren Brennraum 4 für leicht entzündliche Anzünder 5 und einen in dem Gehäuse 3 ausgebildeten oberen Brennraum 6 für den kohlenstoffhaltigen Brennstoff 2. Bei dem kohlenstoffhaltigen Brennstoff 2 handelt es sich um Kohlen, so wie sie für den Betrieb eines Grills oder auch für den Betrieb einer Wasserpfeife geeignet sind. Im betriebsfertigen Zustand ist der obere Brennraum 6 über dem unteren Brennraum 4 angeordnet und der untere Brennraum 4 und der obere Brennraum 6 sind durch ein gasdurchlässiges Trennelement 7 voneinander getrennt. Im vorliegenden Fall handelt es sich bei dem gasdurchlässigen Trennelement 7 um ein gelochtes Blech. Die obere Seite 8 des Trennelements 7, die dem oberen Brennraum 6 zugewandt ist, bildet einen Aufnahmeort für den Brennstoff 2. Das Trennelement 7 ist so ausgebildet, dass die im entzündeten Zustand des Anzünders 5 entstehenden Anzünderabgase 9 durch das Trennelement 7 hindurchtreten und auf den auf dem Trennelement 7 ruhenden Brennstoff 2 treffen.

In Fig. 2 ist eine Alternative zu einem entflammbaren Anzünder 5 dargestellt. Hier sorgt ein elektrisches Heizelement 10 für die erforderliche Hitzeentwicklung, um den Brennstoff 2 im oberen Brennraum 3 zu entzünden. Zum Anschluss des elektrischen Heizelements 10 an eine elektrische Energiequelle ist ein elektrisches Anschlusselement 27 an dem Gehäuse 3 des Anzündkamins 1 vorgesehen. Der untere Brennraum 4 muss also nicht zwingend einen Anzünder 5 aufnehmen, es kann sich um eine beliebige, geeignete Hitzequelle handeln.

Zur Handhabung des Anzündkamins 1 ist seitlich an dem Gehäuse ein Griff 25 mit einem Hitzeschild 26 vorgesehen.

Oberhalb des Aufnahmeortes für den Brennstoff 2 ist ein Katalysator 11 vorgesehen, der der Katalyse der Oxidation von Kohlenmonoxid zu Kohlendioxid durch Sauerstoff dient. Entsprechend ist der Katalysator 11 so angeordnet, dass die im entzündeten Zustand des Brennstoffes 2 entstehenden Brennstoffabgase 12 zumindest teilweise zu dem Katalysator 11 oder durch den Katalysator 11 geleitet werden und zumindest ein Teil des in den Brennstoffabgasen 12 vorhandenen Kohlenmonoxids zu Kohlendioxid oxidiert wird.

Kohlenstoffmonoxid-Gas entsteht bei der vor allem unvollständigen Verbrennung des kohlenstoffhaltigen Brennstoffs 2. Kohlenmonoxid ist für den Menschen toxisch und führt ab einer gewissen Atemluftkonzentration zur Erstickung. Das Kohlenmonoxid ist vor allem Bestandteil des im entzündeten Zustand des Brennstoffes 2 entstehenden Brennstoffabgases 12. Die Emission des Kohlenmonoxids stellt ein massives Problem dar, besonders wenn Anzündkamine 1 in geschlossenen Räumen betrieben werden. Hier werden nicht selten unzulässige Kohlenmonoxid-Konzentrationen erreicht, weil für eine ausreichende Be- und Entlüftung der Räumlichkeiten nur unzureichend gesorgt ist.

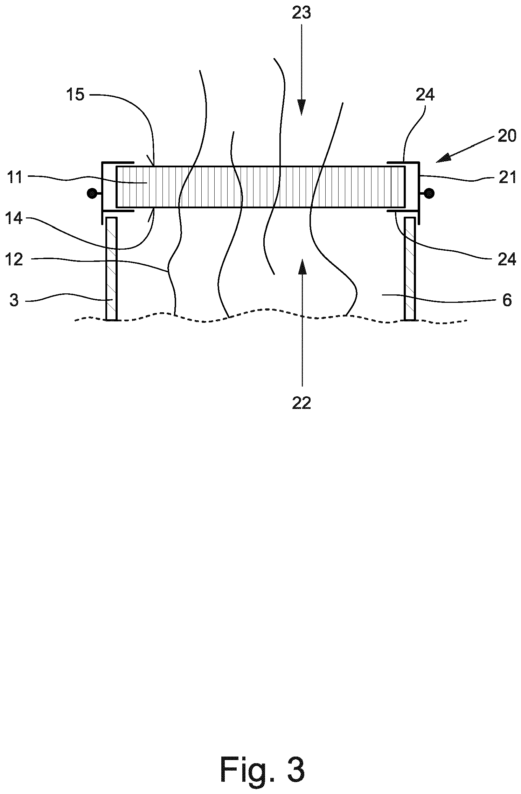

Zur Lösung dieses Problems ist oberhalb des Aufnahmeortes für den Brennstoff 2 - und damit oberhalb des Brennstoffes 2 - ein Katalysator 11 angeordnet. Der Katalysator 11 dient der Katalyse der Oxidation von Kohlenmonoxid zu Kohlendioxid durch Sauerstoff. Der Katalysator 11 ist so angeordnet, dass die im entzündeten Zustand des Brennstoffes 2 entstehenden Brennstoffabgase 12 zumindest teilweise durch den Katalysator 11 geleitet werden und zumindest ein Teil des in den Brennstoffabgasen 12 vorhandenen Kohlenmonoxids zu Kohlendioxid oxidiert wird. Im Folgenden geht es also im Wesentlichen um die Ausgestaltung des Katalysators 11 oder auch einer separaten Katalysatoreinheit 20, die in den Fig. 3 dargestellt ist.

Allen Ausführungsbeispielen ist gemeinsam, dass der Katalysator 11 so angeordnet oder ausgestaltet ist, dass im Betriebszustand, also bei entzündetem Brennstoff 2 der zur Katalyse der Oxidation von Kohlenmonoxid zu Kohlendioxid erforderliche Sauerstoff durch die Umgebungsluft 13 bereitgestellt ist. Dadurch kann auf eine separate Sauerstoffversorgung des Katalysators 11 verzichtet werden, der Katalysator 11 ist also unabhängig von einer separaten Sauerstoffversorgung einsatzfähig. Dazu werden zum Teil konstruktive Maßnahmen ergriffen, die weiter unten beschrieben werden. In den Figuren sind die Strömungswege der Umgebungsluft 13 teilweise angedeutet.

In allen Ausführungsbeispielen ist der Katalysator 11 von einem Gas durchströmbar, wobei im bestimmungsgemäßen Betriebszustand bei entzündetem Brennstoff 2 und von den Brennstoffabgasen 12 durchströmten Katalysator 11 der Katalysator 11 zwischen der Einströmseite 14 und der Ausströmseite 15 einen sehr geringen Strömungswiderstand hat. Der Strömungswiderstand ist hier so eingestellt, dass sich im Betriebszustand und im Strömungsgleichgewicht höchstens eine Druckdifferenz zwischen der Einströmseite 14 und der Ausströmseite 15 des Katalysators 11 von maximal 0,5 Pa einstellt.

Allen dargestellten Ausführungsbeispielen ist ebenfalls gemeinsam, dass der Katalysator 11 so ausgelegt ist, dass (bei relativ normalen Umgebungsbedingungen) die vom entzündeten Brennstoff 2 freigesetzte Energie ausreicht, um die Brennstoffabgase 12 durch den Katalysator 11 zu treiben. Auch diese Maßnahme trägt erkennbar dazu bei, dass der Katalysator 11 autark betreibbar ist.

In den dargestellten Ausführungsbeispielen ist der Katalysator 11 aus einer beschichteten, offenporigen Schwammkeramik gebildet. Zur Erzielung der katalytischen Wirkung ist die Schwammkeramik mit Metalloxiden beschichtet, hier aus Übergangsmetallen und Edelmetallen. In den dargestellten Ausführungsbeispielen ist der Katalysator 11 so zu dem Aufnahmeort für den Brennstoff 2 und damit auch zu dem Brennstoff 2 selbst angeordnet, dass im Betriebszustand bei entzündetem Brennstoff 2 bzw. bei aktiver elektrischer Heizvorrichtung 10 die durch den entzündeten Brennstoff 2 bzw. die durch die elektrische Heizvorrichtung 10 zum Katalysator 11 transportierte Energie ausreicht, um die für die zu bewirkende Katalyse von Kohlenmonoxid zu Kohlendioxid erforderliche Katalysatortemperatur zu erzielen. In den dargestellten Ausführungsbeispielen hat der Katalysator 11 eine erforderliche Katalysatortemperatur von 350 °C. Es hat sich in Experimenten jedoch herausgestellt, dass der katalytische Effekt auch schon bei erheblich geringeren Temperaturen oberhalb von 150 °C die Oxidation von Kohlenmonoxid mit Luftsauerstoff zu Kohlendioxid befördert.

Im Ergebnis kann der in den Figuren dargestellte Katalysator 11 vollkommen autark betrieben werden. Es ist weder die Zufuhr von separatem Sauerstoff erforderlich (es reicht der in der Umgebungsluft 13 vorhandene Luftsauerstoff), der Katalysator 11 muss nicht zwangsbelüftet werden (es reicht der durch die Verbrennung des Brennstoffes 2 bewirkte konvektive Luftstrom bzw. Strom der Brennstoffabgase 12) und der eingesetzte Katalysator 11 bedarf keiner Energiezufuhr außer der, die er ohnehin durch seine Anordnung über dem entzündeten Brennstoff 2 erhält. Der Katalysator 11 kann also beispielsweise auch einfach auf einen schon vorhandenen konventionellen Anzündkamin gesetzt werden, also einen Anzündkamin, die noch über keine Ausstattung mit einem Katalysator 11 verfügt, sodass der Problematik der Emission von Kohlenmonoxid sehr schnell und ohne Umbaumaßnahmen abgeholfen werden kann.

In den Fig, 1 und 2 ist gezeigt, dass in oder an dem Gehäuse 3 eine Halterung 16 für den Katalysator 11 ausgebildet ist, nämlich im oberen Bereich des oberen Brennraums 6, wobei der Katalysator 11 von der Halterung 16 gehalten wird, vorliegend lösbar von der Halterung 16 gehalten wird. In Fig. 1 liegt der Katalysator 11 lose auf der Halterung 16 auf. Mittels eines Haltewinkels 17 kann der Katalysator 11 einfach gehandhabt werden, also von der Halterung 16 entfernt werden und auf der Halterung 16 platziert werden. In Fig. 2 wird der Katalysator 11 zusätzlich durch ein feuerfestes Kaminband 28 im Gehäuse 3 des Anzündkamins 1 gehalten.

In Fig. 2 ist ferner dargestellt, dass im Gehäuse 3 im seitlichen Bereich des oberen Brennraums 6 eine Öffnung 18 ausgebildet ist, über die der Brennstoff 2 in den oberen Brennraum 6 einbringbar ist und aus dem oberen Brennraum 6 entnehmbar ist; dazu muss der Katalysator 11 vorher nicht entfernt werden. Die Öffnung 18 ist mit einem Verschlusselement 19 in Form einer Klappe verschließbar. Dies hat den Vorteil, dass der Katalysator 11 nicht aus dem Gehäuse 3 des Anzündkamins 1 entnehmbar sein muss.

In Fig. 3 ist der obere Teil eines Anzündkamins 1 dargestellt, wobei der Katalysator 11 Bestandteil einer Katalysatoreinheit 20 mit einem Tubus 21 ist und der Katalysator 11 in dem Tubus 21 gehalten wird, wobei sich der Tubus 21 zwischen einer ersten Tubusöffnung 22 und einer zweiten Tubusöffnung 23 erstreckt, wobei im Montagezustand der Katalysatoreinheit 20 die erste Tubusöffnung 22 unterhalb der zweiten Tubusöffnung 23 angeordnet ist, wobei der Katalysator 11 in dem Querschnitt des Tubus 21 mit einer Haltevorrichtung 24 zwischen der ersten Tubusöffnung 22 und der zweiten Tubusöffnung 23 gehalten wird, wobei zur Erzielung des Montagezustandes der Katalysatoreinheit 20 der Tubus 21 im Bereich des oberen Brennraums 6 über das Gehäuse 3 übergestülpt wird.

In dem dargestellten Ausführungsbeispiel nimmt der Katalysator 11 über 90 % des Querschnitts des Tubus 21 ein.

In Fig. 3 ist die Haltevorrichtung 24 der Katalysatoreinheit 21 in dem Tubus 21 als zumindest teilweise umlaufender Kragen ausgebildet, wobei der Kragen Unterbrechungen aufweist. Auf dem Kragen bzw. den Kragenelementen stützt sich der Katalysator 11 im Montagezustand aufgrund seiner Gewichtskraft ab, ferner ist der Katalysator 11 formschlüssig gehalten in der Haltevorrichtung 24, sodass er sicher in der Haltevorrichtung 24 gehalten wird und nicht aus ihr herausfallen kann, selbst wenn die Katalysatoreinheit 20 von dem Gehäuse 3 des Anzündkamins 1 entfernt und bewegt wird.

### Bezugszeichen

- 1.: Anzündkamin
- 2.: Brennstoff
- 3.: Gehäuse
- 4.: unterer Brennraum
- 5.: Anzünder
- 6.: oberer Brennraum
- 7.: Trennelement
- 8.: obere Seite des Trennelements
- 9.: Anzünderabgase
- 10.: elektrisches Heizelement
- 11.: Katalysator
- 12.: Brennstoffabgase
- 13.: Umgebungsluft
- 14.: Einströmseite des Katalysators
- 15.: Ausströmseite des Katalysators
- 16.: Halterung
- 17.: Haltewinkel
- 18.: Öffnung
- 19.: Verschlusselement
- 20.: Katalysatoreinheit
- 21.: Tubus
- 22.: erste Tubusöffnung
- 23.: zweite Tubusöffnung
- 24.: Haltevorrichtung
- 25.: Griff
- 26.: Hitzeschild
- 27.: elektrisches Anschlusselement
- 28.: feuerfestes Kaminband

## Patentansprüche

1. Anzündkamin (1) für kohlenstoffhaltigen Brennstoff (2), mit einem Gehäuse (3), einem in dem Gehäuse (3) ausgebildeten unteren Brennraum (4) für leicht entzündlichen Anzünder (5), mit einem in dem Gehäuse (3) ausgebildeten oberen Brennraum (6) für den kohlenstoffhaltigen Brennstoff (2), wobei im betriebsfertigen Zustand der obere Brennraum (6) über dem unteren Brennraum (4) angeordnet ist und der untere Brennraum (4) und der obere Brennraum (6) durch ein gasdurchlässiges Trennelement (7) voneinander getrennt sind, wobei die obere Seite (8) des Trennelements (7), die dem oberen Brennraum (6) zugewandt ist, einen Aufnahmeort für den Brennstoff (2) bildet, wobei das Trennelement (7) so ausgebildet ist, dass die im entzündeten Zustand des Anzünders (5) entstehenden Anzünderabgase (9) durch das Trennelement (7) hindurchtreten und auf den auf dem Trennelement (7) ruhenden Brennstoff (2) treffen,
**dadurch gekennzeichnet,**
**dass** oberhalb des Aufnahmeortes für den Brennstoff (2) ein Katalysator (11) zur Katalyse der Oxidation von Kohlenmonoxid zu Kohlendioxid durch Sauerstoff so angeordnet ist, dass die im entzündeten Zustand des Brennstoffes (2) entstehenden Brennstoffabgase (12) zumindest teilweise zu dem Katalysator (11) oder durch den Katalysator (11) geleitet werden und zumindest ein Teil des in den Brennstoffabgasen (12) vorhandenen Kohlenmonoxids zu Kohlendioxid oxidiert wird.

2. Anzündkamin (1) nach Anspruch 1, **dadurch gekennzeichnet, dass** der Katalysator (11) so angeordnet oder ausgestaltet ist, dass im Betriebszustand bei entzündetem Brennstoff (2) der zur Katalyse der Oxidation von Kohlenmonoxid zu Kohlendioxid erforderliche Sauerstoff durch Umgebungsluft (13) bereitgestellt ist.

3. Anzündkamin (1) nach Anspruch 1 oder 2, **dadurch gekennzeichnet, dass** der Katalysator (11) durchströmbar ist, wobei im bestimmungsgemäßen Betriebszustand bei entzündetem Brennstoff (2) und von den Brennstoffabgasen (12) durchströmten Katalysator (11) der Katalysator (11) zwischen der Einströmseite (14) und der Ausströmseite (15) einen so geringen Strömungswiderstand hat, dass sich ein Druckabfall von höchsten 15 Pa, bevorzugt von höchstens 1 Pa, bevorzugt von höchstens 0,5 Pa, besonders bevorzugt von höchstens 0,05 Pa einstellt.

4. Anzündkamin (1) nach einem der Ansprüche 1 bis 3, **dadurch gekennzeichnet, dass** der Katalysator (11) so ausgelegt ist, dass die vom entzündeten Brennstoff (2) freigesetzte Energie ausreicht, um die Brennstoffabgase (12) durch den Katalysator (11) zu treiben.

5. Anzündkamin (1) nach einem der Ansprüche 1 bis 4, **dadurch gekennzeichnet, dass** der Katalysator (11) zumindest teilweise aus einer beschichteten, offenporigen Schwammkeramik gebildet ist, wobei die Beschichtung zumindest teilweise aus Metalloxiden gebildet ist, insbesondere aus Übergangsmetallen und/oder Edelmetallen.

6. Anzündkamin (1) nach einem der Ansprüche 1 bis 5, **dadurch gekennzeichnet, dass** der Katalysator (11) so zu dem Aufnahmeort für den Brennstoff (2) angeordnet ist, dass im Betriebszustand bei entzündetem Brennstoff (2) die durch den entzündeten Brennstoff (2) zum Katalysator (11) transportierte Energie ausreicht, um die für die zu bewirkende Katalyse von Kohlenmonoxid zu Kohlendioxid erforderliche Katalysatortemperatur zu erzielen.

7. Anzündkamin (1) nach Anspruch 6, **dadurch gekennzeichnet, dass** der Katalysator (11) eine erforderliche Katalysatortemperatur von höchstens 800 °C, insbesondere von höchstens 400 °C, insbesondere von höchstens 300 °C, insbesondere von höchstens 200 °C, bevorzugt von höchstens 100 °C aufweist.

8. Anzündkamin (1) nach einem der Ansprüche 1 bis 7, **dadurch gekennzeichnet, dass** in oder an dem Gehäuse (3) eine Halterung (16) für den Katalysator (11) ausgebildet ist, insbesondere im oberen Bereich des oberen Brennraums (6), wobei der Katalysator (11) von der Halterung (16) gehalten wird, insbesondere lösbar von der Halterung (16) gehalten wird.

9. Anzündkamin (1) nach einem der Ansprüche 1 bis 8, **dadurch gekennzeichnet, dass** im Gehäuse (3) im seitlichen Bereich des oberen Brennraums (6) eine Öffnung (18) ausgebildet ist, über die der Brennstoff (2) in den oberen Brennraum (6) einbringbar ist und aus dem oberen Brennraum (6) entnehmbar ist, insbesondere ohne den Katalysator (11) vorher zu entfernen, insbesondere wobei die Öffnung (18) mit einem Verschlusselement (19) verschließbar ist.

10. Anzündkamin (1) nach einem der Ansprüche 1 bis 7, **dadurch gekennzeichnet, dass** der Katalysator (11) Bestandteil einer Katalysatoreinheit (20) mit einem Tubus (21) ist und der Katalysator (11) in dem Tubus (21) gehalten wird, wobei sich der Tubus (21) zwischen einer ersten Tubusöffnung (22) und einer zweiten Tubusöffnung (23) erstreckt, wobei im Montagezustand der Katalysatoreinheit (20) die erste Tubusöffnung (22) unterhalb der zweiten Tubusöffnung (23) angeordnet ist, wobei der Katalysator (11) in dem Querschnitt des Tubus (21) mit einer Haltevorrichtung (24) zwischen der ersten Tubusöffnung (22) und der zweiten Tubusöffnung (23) gehalten wird, wobei zur Erzielung des Montagezustandes der Katalysatoreinheit (20) der Tubus (21) im Bereich des oberen Brennraums (6) in das Gehäuse (3) eingesteckt wird oder über das Gehäuse (3) übergestülpt wird.

11. Anzündkamin (1) nach Anspruch 10, **dadurch gekennzeichnet, dass** der Katalysator (11) mindestens 99 %, bevorzugt mindestens 95 %, insbesondere mindestens 85 %, bevorzugt mindestens 75 % des Querschnitts des Tubus (21) einnimmt.

12. Anzündkamin (1) nach Anspruch 10 oder 11, **dadurch gekennzeichnet, dass** die Haltevorrichtung (24) der Katalysatoreinheit (20) in dem Tubus (21) als zumindest teilweise umlaufender Kragen ausgebildet ist, insbesondere wobei der Kragen Unterbrechungen aufweist, auf dem sich der Katalysator (11) im Montagezustand aufgrund seiner Gewichtskraft abstützt.

## Claims

1. Ignition chimney (1) for carbonaceous fuel (2), with a housing (3), a lower combustion chamber (4) formed in the housing (3) for easily ignitable igniter (5), with an upper combustion chamber (6) formed in the housing (3) for the carbonaceous fuel (2), wherein, in the ready-for-operation state, the upper combustion chamber (6) is arranged above the lower combustion chamber (4), and the lower combustion chamber (4) and the upper combustion chamber (6) are separated from one another by a gas-permeable separator (7), wherein the upper side (8) of the separator (7), which faces the upper combustion chamber (6), forms a receptacle for the fuel (2), wherein the separator (7) is designed in such a way that the igniter exhaust gases (9) produced in the ignited state of the igniter (5) pass through the separator (7) and strike the fuel (2) resting on the separator (7),
**characterized in**
**that** a catalyst (11) for catalyzing the oxidation of carbon monoxide to carbon dioxide with oxygen is arranged above the receptacle for the fuel (2) in such a way that the fuel exhaust gases (12) produced in the ignited state of the fuel (2) are directed at least partially to the catalyst (11) or through the catalyst (11) and at least some of the carbon monoxide present in the fuel exhaust gases (12) is oxidized to carbon dioxide.

2. Ignition chimney (1) according to claim 1, **characterized in that** the catalyst (11) is arranged or designed in such a way that, in the operating state, when the fuel (2) is ignited, the oxygen required to catalyze the oxidation of carbon monoxide to carbon dioxide is provided by ambient air (13).

3. Ignition chimney (1) according to claim 1 or 2, **characterized in that** the catalyst (11) can be flowed through, wherein, in the intended operating state, where ignited fuel (2) and catalyst (11) are flowed through by the fuel exhaust gases (12), the catalyst (11) has such a low flow resistance between the inflow side (14) and the outflow side (15), that a pressure drop of at most 15 Pa, preferably of at most 1 Pa, preferably of at most 0.5 Pa, particularly preferably of at most 0.05 Pa, occurs.

4. Ignition chimney (1) according to any one of claims 1 to 3, **characterized in that** the catalyst (11) is designed such that the energy released by the ignited fuel (2) is sufficient to drive the fuel exhaust gases (12) through the catalyst (11).

5. Ignition chimney (1) according to any one of claims 1 to 4, **characterized in that** the catalyst (11) is formed at least partially from a coated, open-pored ceramic foam, wherein the coating is formed at least partially from metal oxides, in particular from transition metals and/or noble metals.

6. Ignition chimney (1) according to any one of claims 1 to 5, **characterized in that** the catalyst (11) is arranged relative to the receptacle for the fuel (2) in such a way that, in the operating state with ignited fuel (2), the energy transported by the ignited fuel (2) to the catalyst (11) is sufficient to achieve the catalyst temperature required for bringing about catalysis of carbon monoxide to carbon dioxide.

7. Ignition chimney (1) according to claim 6, **characterized in that** the catalyst (11) has a required catalyst temperature of at most 800 °C, in particular of at most 400 °C, in particular of at most 300 °C, in particular of at most 200 °C, preferably of at most 100 °C.

8. Ignition chimney (1) according to any one of claims 1 to 7, **characterized in that** a holder (16) for the catalyst (11) is formed in or on the housing (3), in particular in the upper region of the upper combustion chamber (6), wherein the catalyst (11) is held by the holder (16), in particular is held detachably by the holder (16).

9. Ignition chimney (1) according to any one of claims 1 to 8, **characterized in that** an opening (18) is formed in the housing (3) in the side region of the upper combustion chamber (6), via which opening the fuel (2) can be introduced into the upper combustion chamber (6) and can be re-moved from the upper combustion chamber (6), in particular without first removing the catalyst (11), in particular wherein it is possible to close the opening (18) with a closure element (19).

10. Ignition chimney (1) according to any one of claims 1 to 7, **characterized in that** the catalyst (11) is a component of a catalyst unit (20) with a tube (21) and the catalyst (11) is held in the tube (21), wherein the tube (21) extends between a first tube opening (22) and a second tube opening (23), wherein, in the assembled state of the catalyst unit (20), the first tube opening (22) is arranged below the second tube opening (23), wherein the catalyst (11) is held in the cross section of the tube (21) with a holding device (24) between the first tube opening (22) and the second tube ope-ing (23), wherein, in order to achieve the assembled state of the catalyst unit (20), the tube (21) is inserted into the housing (3) in the region of the upper combustion chamber (6) or is slipped over the housing (3).

11. Ignition chimney (1) according to claim 10, **characterized in that** the catalyst (11) occupies at least 99%, preferably at least 95%, in particular at least 85%, preferably at least 75% of the cross-section of the tube (21).

12. Ignition chimney (1) according to claim 10 or 11, **characterized in that** the holding device (24) of the catalyst unit (20) in the tube (21) is de-signed as an at least partially circumferential collar, in particular wherein the collar has interruptions on which the catalyst (11) is supported in the assembled state due to its weight force.

## Revendications

1. Cheminée d'allumage (1) pour combustible carboné (2), comportant un logement (3), une chambre de combustion inférieure (4) formée dans le logement (3) pour des allumeurs (5) facilement inflammables, comportant une chambre de combustion supérieure (6) formée dans le logement (3) pour le combustible carboné (2), et dans l'état prêt au fonctionnement, la chambre de combustion supérieure (6) étant disposée au-dessus de la chambre de combustion inférieure (4) et la chambre de combustion inférieure (4) et la chambre de combustion supérieure (6) étant séparées l'une de l'autre par un élément de séparation (7) perméable aux gaz, le côté supérieur (8) de l'élément de séparation (7), lequel côté est tourné vers la chambre de combustion supérieure (6), formant un emplacement de réception pour le combustible (2), l'élément de séparation (7) étant formé de telle sorte que les effluents gazeux d'allumeur (9) produits dans l'état allumé de l'allumeur (5) traversent l'élément de séparation (7) et entrent en contact avec le combustible (2) reposant sur l'élément de séparation (7), **caractérisée en ce**
**qu'**un catalyseur (11) servant à la catalyse de l'oxydation de monoxyde de carbone en dioxyde de carbone par l'oxygène est disposé au-dessus de l'emplacement de réception de combustible (2) de telle sorte que les effluents gazeux de combustible (12) produits dans l'état allumé du combustible (2) soient guidés au moins partiellement jusqu'au catalyseur (11) ou à travers le catalyseur (11) et qu'au moins une partie du monoxyde de carbone présent dans les effluents gazeux de combustible (12) soit oxydée en dioxyde de carbone.

2. Cheminée d'allumage (1) selon la revendication 1, **caractérisée en ce que** le catalyseur (11) est disposé ou conçu de telle sorte que dans l'état de fonctionnement, lorsque le combustible (2) est allumé, l'oxygène nécessaire à la catalyse de l'oxydation de monoxyde de carbone en dioxyde de carbone est fourni par l'air ambiant (13).

3. Cheminée d'allumage (1) selon la revendication 1 ou 2, **caractérisée en ce qu'**un écoulement à travers le catalyseur (11) est possible, et dans l'état de fonctionnement correct, lorsque le combustible (2) est allumé et que le catalyseur (11) est traversé par les effluents gazeux de combustible (12), le catalyseur (11) a une résistance à l'écoulement tellement faible entre le côté d'entrée (14) et le côté de sortie (15) qu'une diminution de pression d'au maximum 15 Pa, de préférence d'au maximum 1 Pa, de préférence d'au maximum 0,5 Pa, de manière particulièrement préférée d'au maximum 0,05 Pa est produite.

4. Cheminée d'allumage (1) selon l'une des revendications 1 à 3, **caractérisée en ce que** le catalyseur (11) est conçu de telle sorte que l'énergie libérée par le combustible (2) allumé suffit à entraîner les effluents gazeux de combustible (12) à travers le catalyseur (11).

5. Cheminée d'allumage (1) selon l'une des revendications 1 à 4, **caractérisée en ce que** le catalyseur (11) est formé au moins partiellement à partir d'une mousse de céramique à pores ouverts revêtue, le revêtement étant formé au moins partiellement à partir d'oxydes de métal, en particulier à partir de métaux de transition et/ou de métaux nobles.

6. Cheminée d'allumage (1) selon l'une des revendications 1 à 5, **caractérisée en ce que** le catalyseur (11) est disposé par rapport à l'emplacement de réception de combustible (2) de telle sorte que dans l'état de fonctionnement, lorsque le combustible (2) est allumé, l'énergie transportée par le combustible (2) allumé jusqu'au catalyseur (11) suffit pour atteindre la température de catalyseur nécessaire pour la catalyse de monoxyde de carbone en dioxyde de carbone devant être provoquée.

7. Cheminée d'allumage (1) selon la revendication 6, **caractérisée en ce que** le catalyseur (11) présente une température de catalyseur nécessaire d'au maximum 800°C, en particulier d'au maximum 400 °C, en particulier d'au maximum 300 °C, en particulier d'au maximum 200 °C, de préférence d'au maximum 100 °C.

8. Cheminée d'allumage (1) selon l'une des revendications 1 à 7, **caractérisée en ce qu'**un support (16) pour le catalyseur (11) est formé dans ou sur le logement (3), en particulier dans la région supérieure de la chambre de combustion supérieure (6), le catalyseur (11) étant retenu par le support (16), en particulier étant retenu de manière amovible par le support (16).

9. Cheminée d'allumage (1) selon l'une des revendications 1 à 8, **caractérisée en ce que** dans le logement (3), dans la région latérale de la chambre de combustion supérieure (6), est formée une ouverture (18) par le biais de laquelle le combustible (2) peut être introduit dans la chambre de combustion supérieure (6) et peut être retiré de la chambre de combustion supérieure (6), en particulier sans retirer préalablement le catalyseur (11), en particulier l'ouverture (18) pouvant être fermée à l'aide d'un élément de fermeture (19) .

10. Cheminée d'allumage (1) selon l'une des revendications 1 à 7, **caractérisée en ce que** le catalyseur (11) fait partie d'une unité à catalyseur (20) dotée d'un tube (21) et le catalyseur (11) est retenu dans le tube (21), le tube (21) s'étendant entre une première ouverture de tube (22) et une deuxième ouverture de tube (23), la première ouverture de tube (22) étant disposée en dessous de la deuxième ouverture de tube (23) dans l'état de montage de l'unité à catalyseur (20), le catalyseur (11) étant retenu dans la section transversale du tube (21) à l'aide d'un dispositif de retenue (24) entre la première ouverture de tube (22) et la deuxième ouverture de tube (23), le tube (21) étant inséré dans le logement (3) ou étant enfoncé par-dessus le logement (3) dans la région de la chambre de combustion supérieure (6) pour obtenir l'état de montage de l'unité à catalyseur (20) .

11. Cheminée d'allumage (1) selon la revendication 10, **caractérisée en ce que** le catalyseur (11) occupe au moins 99 %, de préférence au moins 95 %, en particulier au moins 85 %, de préférence au moins 75 % de la section transversale du tube (21).

12. Cheminée d'allumage (1) selon la revendication 10 ou 11, **caractérisée en ce que** le dispositif de retenue (24) de l'unité à catalyseur (20) dans le tube (21) est formé en tant que collerette au moins partiellement périphérique, en particulier la collerette présentant des interruptions sur lesquelles le catalyseur (11) est supporté dans l'état de montage du fait de son poids.
